# EUROPÄISCHE PATENTSCHRIFT

(11) **EP 2 826 732 B1**
(45) Veröffentlichungstag und Bekanntmachung des Hinweises auf die Patenterteilung: **06.12.2017**
(21) Anmeldenummer: 14002444.9
(22) Anmeldetag: 16.07.2014
(51) Int. Cl.: B65G 1/04

(54) **Erweitbare Kommissioniervorrichtung mit einem aus Modulen ausgebauten Regal**
Upgradeable commissioning system with a rack built from modular units
Dispositif de préparation de commandes évolutif comprenant un rack construit à partir de modules

(30) Priorität: 16.07.2013 DE 102013011801; 17.09.2013 DE 102013016332
(43) Veröffentlichungstag der Anmeldung: 21.01.2015
(73) Patentinhaber: Apostore GmbH, 45881 Gelsenkirchen (DE)
(72) Erfinder:
(74) Vertreter: Tilmann, Max Wilhelm

(56) Entgegenhaltungen:
- EP-A1- 2 574 574
- EP-A2- 1 892 201
- DE-A1-102005 048 379
- DE-U1- 20 317 901
- GB-A- 2 143 223
- US-A1- 2008 193 247
- "DIBOND Product information and Processing", , 31. August 2010 (2010-08-31), Seiten 28-28, XP055155423, 3A COMPOSITES Gefunden im Internet: URL:http://www.display.3acomposites.com/en /downloads/dibond.html [gefunden am 2014-11-27]

## Beschreibung

Die Erfindung betrifft eine Kommissioniervorrichtung, insbesondere für den Einsatz in Apotheken. Herkömmliche Kommissionierautomaten werden typischerweise aus einem Robotergerüst und Regalen aufgebaut. Dabei werden die Regale in erster Linie nach den Erfordernissen der Roboter konstruiert, die unter möglichst lineare geometrischen Rahmenbedingungen eingesetzt werden sollen.

Dementsprechend werden hierzu im Stand der Technik möglichst über die gesamte Fahrlänge konstruierte Grundplatten oder Gerüste und darauf Schienen und vertikale Stützen verbaut. Die vertikalen Stützen verbinden ihrerseits Stützen mit Regalen. Häufig stabilisieren Längs- oder Diagonalverbände das Ständerwerk. Eine Verkleidung wird, wenn benötigt, außen aufgebracht. Dabei steht insgesamt die Einhaltung geringer Toleranzen im Vordergrund.

Ein Nachteil bekannter Kommissioniervorrichtungen liegt darin, dass eine Veränderung der Anlage schwierig ist bzw. bei dem Versuch, die Anlage zu verlängern, zu verkürzen oder zu erhöhen, die Struktur an einer Stelle aufgetrennt werden muss, eine Zwischenkonstruktion eingebracht und mit der restlichen Struktur verbunden werden muss.

Problematisch sind insbesondere Diagonalverbände. Eine Höhenanpassung ist nur mit sehr großem Aufwand möglich. Alle vertikalen Elemente, inklusive der Außenverkleidung, passen nicht mehr.

Die GB 2 143 223 A1 beschreibt einen aus mehreren Boxen zusammengesetzten, unterirdisch zu vergrabenden Lagerraum. Die Boxen sind jeweils von transportabler Größe, um mit einem Lastkraftwagen transportiert werden. Die einzelnen Boxen sind mit Ablagen ("racks") für einzulagernde Güter ausgestattet. Die jeweiligen Boxen weisen eine Höhe und Tiefe von ca. 2m und eine Länge von ca. 6m auf. Zwischen den Auflageflächen einer Box ist ein Freiraum vorgesehen, entlang dessen sich ein Regalbediengerät ("stacker crane") bewegen kann. Dafür sind auf dem Boden der Box Schienen vorgesehen. Ferner ist an der Decke der Box eine Führungsschiene zur Führung des Regalbediengeräts vorgesehen. Das Regalbediengerät weist einen Rahmen auf.

Ferner ist eine Basis vorgesehen, die dazu vorgesehen ist, sich entlang des Rahmens auf und ab zu bewegen. Die Basis hat Greifmittel, mit denen ein Artikel auf der Basis festgehalten werden kann und in eine Ablage ("rack") abgelegt werden kann. Der aus GB 2 143 223 A bekannte Lagerraum weist ferner einen Lift auf. Dieser ist am Ende der nebeneinander angeordneten Boxen angeordnet. Der Lift weist eine Basis auf, die dazu vorgesehen ist, sich innerhalb eines Schachts auf und ab zu bewegen, um Artikel von außerhalb des Lagerraums aufzunehmen, die in den Lagerraum eingelagert werden sollen, oder Artikel, die ausgelagert werden sollen, an die Umgebung abzugeben. Der Lift hat ferner Übergabemittel, beispielsweise ein Griffgabel, mit der er Artikel von der Basis des Lifts auf die Basis des Regalbediengeräts oder in umgekehrter Richtung übergeben kann. Im Zusammenhang der Figuren 17 und 18 offenbart die GB 2 143 223 A eine Ausführungsform, bei der mehrere Boxen übereinander gestapelt werden können. Dabei ist es vorgesehen, dass in jeder Box ein eingenes Regalbediengerät vorgesehen ist, somit bei vier vorgesehenen Boxen vier Regalbediengeräte vorgesehen sein Mit anderen Worten offenbart GB 2 143 223 A eine Kommissioniervorrichtung nach dem Oberbegriff des Anspruchs 1. Aus EP 2 574 574 A1 ist eine Kommissioniervorrichtung mit einem Regal bekannt, das auf einer Aufstandsfläche aufstehen kann und dessen Breite größer ist als seine Höhe. Ferner ist bei der Kommissioniervorrichtung gemäß EP 2 574 574 A1 ein universelles Versorgungs- und Steuermodul vorgesehen, das benachbart zu dem Regal angeordnet ist, so das über eine Gehäuse-Ankoppelschnittstelle und eine Modul-Ankoppelschnittstelle eine mechanische Kopplung zwischen dem Gehäuse und dem Versorgungs- und Steuermodul hergestellt werden kann, so dass einzulagernde Arzneimittelpackungen in oder am Versorgungs- und Steuermodul an einer der Steuerelektronik bekannten Position auf eine Fördervorrichtung übergeben werden können.

Aus DE 203 17 901 U1 ist eine Kommissioniervorrichtung bekannt, die mehrere, nebeneinander angeordnete Module aufweist, die auf einer Aufstandsfläche aufstehen können und als Basismodul bezeichnete werden können, wobei die Breite der Basismodule kleiner ist als die Höhe der Basismodule.

Aus DE 10 2005 048 379 A1 ist eine Kommissioniervorrichtung bekannt, die mehrere, nebeneinander angeordnete Module aufweist, die auf einer Aufstandsfläche aufstehen können und als Basismodul bezeichnete werden können, wobei die Breite der Basismodule kleiner ist als die Höhe der Basismodule.

Erfindungsgemäß wird eine Kommissioniervorrichtung geschaffen, die ein Regal aufweist, das aus Modulen gefertigt ist.

Der Erfindung liegt der Gedanke zugrunde, dass für die Roboter einer Kommissioniervorrichtung im Betrieb in erster Linie statische und nicht lineare Rahmenbedingungen vorteilhaft sind. Dieser Gedanke erlaubt es, eine Kommissioniervorrichtung vorzusehen, die auf Modulen aufgebaut ist.

Der Erfinder hat ferner erkannt, dass die erfindungsgemäße Kommissioniervorrichtung mit modulartig aufgebauten Regalen eine zusätzliche Flexibilität bei der Gestaltung und Anordnung der Module erlaubt, wenn die zu lagernden Güter in ihren Lagerpositionen von einem "anlernbaren" Regalbediengerät angesteuert werden. Soweit der modulare Aufbau dabei zu "unregelmäßigen" Lagerpositionen führt, lässt sich dies bevorzugt durch eine Anlernfunktion der Roboter kompensieren.

Ferner bietet die Erfindung den Vorteil, dass der Hersteller von Kommissioniervorrichtungen im Wesentlichen kundenspezifisch bauen kann, ohne die Kosten für kundenspezifische Bauelemente zu haben. Durch den Einsatz von Modulen mit diversen Funktionsbausteinen (Basismodul, Erweiterungsmodul, Einlagermodul, Ausgleichsmodul) sowie den Einsatz von Endstücken kann nahezu jede beliebige Konstellation gebaut werden; die Module können jedoch offline und damit entkoppelt von den Lieferterminen in optimalen Losgrößen gebaut werden. Das hat eine gleichmäßige Produktionsauslastung, schnelle Lieferzeiten, kurze Aufbauzeiten zur Folge.

Erfindungsgemäß umfasst dabei der Begriff anlernbares Regalbediengerät ein Regalbediengerät, das nach dem Aufbau der Kommissioniervorrichtung in einem Einrichtbetrieb zu mehreren repräsentativen Punkten verfährt, die die Lage der Module und damit der Lagerorte hinreichend bestimmen. Die repräsentativen Punkte können durch taktile und/oder optoelektronische Sensoren in ihren Koordinaten maschinell erfasst werden. Alternativ oder zusätzlich kann es möglich sein, durch schrittweises Annähern des Regalbediengeräts an einen jeweiligen Punkt mittels eines Messinstruments oder/und einer geeigneten Sichtprüfung das Regalbediengerät diesen Punkt anfahren zu lassen. Die Punkte können in einer Datenbank einer Steuerung des Regalbediengeräts hinterlegt werden. Die hinterlegten Punkte können die Lagerorte der Kommissioniervorrichtung und die gesamte "Lagerumwelt" hinreichend genug abbilden. Auch ein nichtlinearer Aufbau, der sich durch die Modulbauweise ergibt, kann abgebildet werden. Durch das physikalische Anfahren (Anlernen) der Punkte können die meisten bzw. alle Ungenauigkeiten berücksichtigt werden, die sich beispielsweise durch den Aufbau der Lagermodule, die Ausrichtung der Fahrschiene des Regalbdiengeräts zu den Modulen und/oder die Gradlinigkeit des Regalbediengeräts ergeben.

Die erfindungsgemäßen Module erlauben es, nicht nur eine Flexibilität bei Auf- und Umbau zu erreichen, sondern auch einen vereinfachten Transport und einen sehr schnellen Aufbau.

In einer bevorzugten Ausführungsform können mehrere Regale vorgesehen sein, die einzeln stehende Schränke aufweisen. Die einzeln stehenden Schränke können miteinander verbunden sein. Die einzeln stehenden Schränke können in der Länge oder übereinander gesetzt werden. Sich ergebende Regale können verschieden lang sein. Die sich ergebenden Regale können unterschiedlich hoch sein. Ein Regal kann auch über die Breite eine unterschiedliche Höhe aufweisen. Zum Beschicken bzw. Ein- und/oder Auslagern mit Gütern kann ein Regalbediengerät verwendet werden, dessen Schiene verlängert oder gekürzt werden kann. Es kann auch die Höhe des Masts angepasst werden.

Allen anderen Komponenten wie Schaltschrank, Einlagereinheit, Greifer, Fahrwerk etc. können unverändert wie beim Stand der Technik verwendet werden.

Die erfindungsgemäße Kommissioniervorrichtung weist mindestens ein Modul, vorzugsweise mehrere Module auf, die auf einer Aufstandsfläche aufstehen können und die als Basismodule bezeichnet werden. Die Breite der Basismodule kann kleiner als die Höhe der Basismodule sein. Mit den Basismodulen können Lagerflächen in Form von Regalen für die Kommissioniervorrichtung bereitgestellt werden.

Die Basismodule weisen im Wesentlichen die gleiche Höhe auf, wobei ein Erweiterungsmodule vorgesehen ist, das verschiebungssicher auf ein Basismodul aufsteckbar und/oder auf dem Basismodul angeschraubt ist, um das Regal in der Höhe zu erweitern. Die Breite der Erweiterungsmodule kann größer als die Höhe der Erweiterungsmodule sein. Ein Erweiterungsmodul kann jedoch beispielsweise auch eine gleiche Breite wie Höhe aufweisen. Hierdurch kann erreicht werden, dass eine Erweiterung in der Höhe modular geschaffen werden kann, wobei ein sicherer Stand der Kommissioniervorrichtung auch bei einer Erweiterung in die Höhe erhalten bleibt. Ein verschiebungssicheres Aufstecken eines Erweiterungsmoduls auf ein Basismodul kann derart vorgesehen sein, dass eine Naht der Rückwand zwischen Basismodul und Erweiterungsmodul fast nicht zu erkennen ist. Ein verschiebungssicheres Aufstecken eines Erweiterungsmoduls auf ein Basismodul kann derart vorgesehen sein, dass aufeinander angepasste Führungs- und/oder Steckelemente an Basismodul und Erweiterungsmodul vorgesehen sind, die ineinandergreifen. Beispielsweise kann eine S-förmige Kante des Erweiterungsmoduls über ein I-förmiges Element des Basismoduls aufgeschoben werden, so dass verschiebungssicher die geraden Außenflächen fluchtend aufeinanderstoßen können. In einer bevorzugten Ausführungsform ist die Höhe der Erweiterungsmodule im Bereich von 30 bis 50 cm, insbesondere bevorzugt im Wesentlichen gleich 40 cm. Es können auf ein Basismodul übereinander mehrere Erweiterungsmodule aufgesteckt werden. Beispielweise kann somit eine Kommissioniervorrichtung geschaffen werden, die eine Höhe von 2,4 m + n * 0,4 m aufweist, wobei n eine natürliche Zahl und auch Null sein kann.

In einer bevorzugten Ausführungsform sind die Module verstrebungsfrei miteinander verbunden. Die Module können ohne nach außen ragende Elemente, wie beispielsweise Querstreben und/oder diagonal verlaufende Streben, miteinander verbunden sein.

In der erfindungsgemäßen Ausführungsform sind die Module mittels Steckverbindung miteinander verbindbar und/oder miteinander verschraubbar, so dass die Kommissioniervorrichtung jederzeit vergrößerbar, verkleinerbar oder auch versetzbar ist.

In einer bevorzugten Ausführungsform sind Module zur Lagerung von zu lagernden Gütern vorgesehen, die eine vorbestimmte Breite, beispielsweise im Bereich von 50 bis 90 cm, bevorzugt 60 bis 80 cm, insbesondere bevorzugt 72 cm, aufweisen. Mit einer standardisierten Breite der Module kann beispielsweise eine Kommissioniervorrichtung geschaffen werden, deren Länge um die Hälfte der Breite der vorbestimmten Breite erweiterbar ist. Bevorzugt kann dazu ein Ausgleichsmodul vorgesehen sein, das die Hälfte der Breite aufweist, die der Hälfte eines Moduls zur Lagerung entspricht. In dem Ausgleichsmodul können auch zu lagernde Güter eingelagert werden, oder das Ausgleichsmodul beinhaltet Technik, Elektrik usw. der Kommissioniervorrichtung.

Die Kommissioniervorrichtung kann auch ein Modul zur Einlagerung von zu lagernden Gütern aufweisen, das eine Breite aufweist, die dem doppelten einer Breite eines Moduls zur Lagerung entspricht. Die Basismodule und das Modul zur Einlagerung können damit ein vordefiniertes Verhältnis der Breiten aufweisen, so dass eine besondere Kombinierbarkeit hinsichtlich des genauen Aufbaus gegeben sein kann. Es kann demnach eine Kommissioniervorrichtung geschaffen werden, die Module aufweist, deren Breite in einem vorbestimmten Verhältnis zur Breite des Moduls zur Einlagerung aufweist.

Die erfindungsgemäße Kommissioniervorrichtung weist in einer bevorzugten Ausführungsform eine viereckige Aufstandsfläche auf, wobei mindestens ein Endstück vorgesehen ist, dass zwei Reihen einander zugewandter Module miteinander verbindet. In einer besonders bevorzugten Ausführungsform sind zwei einander gegenüberliegende Endstücke vorgesehen, die zwei Reihen einander zugewandter Module miteinander verbinden, um einen von der Kommissioniervorrichtung umgebenen Bereich zu bilden. Hierdurch kann eine Kommissioniervorrichtung geschaffen werden, die modular aufgebaut ist, und bei der ein zwischen den einander zugewandten Regalen ergebender Gang endseitig geschlossen sein kann. In einer bevorzugten Ausführungsform kann der Gang nach oben über Deckelemente zwischen den Modulen überdeckt werden. Die beiden Regalhälften der einander zugewandten Module können mittels der Endstücke und/oder der Deckelemente auf einem definierten Abstand gehalten werden und gegen ein Kippen gesichert werden. In einer bevorzugten Ausführungsform können die Endstücke eine Glasscheibe zum Durchsehen haben oder auch als Tür ausgebildet sein. Beispielsweise kann in einem undurchsichtigen Endstück eine Service-Durchgangstür vorgesehen sein, um die Kommissioniervorrichtung zu warten. In einer bevorzugten Ausführungsform sind die Deckelemente so bemessen, dass nicht immer bewegliche Fuge auf bewegliche Fuge trifft.

In einer bevorzugten Ausführungsform kann über zwei Endstücke und dazwischen angeordneten Modulen, wie beispielsweise einem Modul zur Einlagerung, Basismodulen und einem Ausgleichsmodul, ein Rundumregal geschaffen werden.

Mittels der Module kann eine Kommissioniervorrichtung geschaffen werden, die einen abgeschlossenen bzw. abschließbaren Raum definiert, indem Module derart ausgerichtet sind, dass ihre Rückwand eine Außenwand der Kommissioniervorrichtung bildet. Der abgeschlossene Raum kann den Vorteil bieten, dass auf die zu lagernden Güter nur über ein Modul zur Einlagerung bzw. Einlagermodul und/oder einen Ausgabeschacht bzw. Ausgabekanal zugegriffen werden kann. Zu diesem Zweck kann das Modul zur Einlagerung eine schließbare Öffnung aufweisen. Vorzugsweise kann die schließbare Öffnung ein Rollo oder eine Klappe und/oder Türe umfassen.

In einer bevorzugten Ausführungsform ist neben einem Endstück ein Modul zur Einlagerung vorgesehen, das die doppelte Breite aufweist, die ein Modul zur Lagerung hat. In einer bevorzugten Ausführungsform kann das Modul zur Einlagerung derart ausgestaltet sein, dass es mehrere, beispielsweise siebzig, gleiche Einlagerpositionen aufweist, die hinter einem Rollo angeordnet sind. Ein derartiges Modul zur Einlagerung ist nicht notwendigerweise mit einer erfindungsgemäßen Kommissioniervorrichtung verbunden, sondern kann auch eigenständig als eigenes bzw. separates Modul beansprucht oder mit einer anderen Kommissioniervorrichtung kombiniert werden. Bei dem Modul zur Einlagerung kann das Rollo damit siebzig gleiche Einlagerpositionen freigeben. Die Größe der Einlagerposition ist so gewählt, dass die Mehrzahl der zu lagernden Güter in eine der Einlagerposition hineinpaßt, aber doch so klein, dass möglichst viele Einlagerpositionen untergebracht werden können. Die Form und Größe der Einlagerpositionen kann jedoch auch jeweils unterschiedlich sein. So sind auch Ausführungsformen möglich, bei denen siebzig Einlagerpositionen mit gleicher Form und Größe und zusätzlich, beispielsweise darüber eine Reihe mit größeren Fächern vorgesehen ist. Diese zusätzliche Reihe kann anstelle durch das Rollo auch durch eine Plexiglasscheibe verschlossen sein. So kann man beim Befüllen der Einlagerpositionen bei einem großen Produkt von der bevorzugt eingesetzten Einlagerreihenfolge von links nach rechts und von oben nach unten abweichen und die Plexiglasscheibe beispielsweise durch Hochkippen öffnen und den Artikel dort einlegen. In einer bevorzugten Ausführungsform kann der Rechner durch einen Sensor an der Klappe erkennen, dass eine Einlagerung oben (dort vorzugsweise auch von von links nach rechts) stattgefunden hat. Beispielsweise kann zur Kosteneinsparung auf die Ablageüberprüfung per Lichtschranke verzichtet werden und nach einer Regel eingelagert werden. Hierzu ist das Regalbediengerät "intelligent" ausgestattet. Das was die Steuereinheit des Regalbediengeräts annimmt, was an der Einlagerposition für ein zu einlagerndes Gut vorliegt, wird auf einem Abbild der Einlagerung auf dem Bildschirm angezeigt. Stimmt das Abbild auf dem Bildschirm nicht mit der Realität überein, kann jede Einlagerposition angeklickt werden und zeigt das dort vermutete Medikament. Falsch liegende Packungen können entnommen und einzeln über das Antippen des korrespondierenden Lagerortes auf dem Bildschirm gelöscht werden. Für große Packungen ist eine vorbestimmte Ebene, beispielsweise oben, vorgesehen. Damit dort nicht unbemerkt einzulagernde Güter eingelegt werden, ist eine Sichtklappe vor der Ebene angeordnet. Öffnet man die Sichtklappe, so kann dies durch einen Sensor erkannt werden und die Feldmarkierung auf dem Bildschirm, die den erwarteten Ablageort anzeigt springt auf das erste freie Feld im Sonderbereich.

In einer bevorzugten Ausführungsform sind die Module zur Lagerung mit Fachböden ausgestaltet, die einen Verbundwerkstoff aufweisen. Bei dem Verbundwerkstoff kann es sich insbesondere um einen Aluminium-Kunststoff-Verbundwerkstoff, beispielsweise den unter dem Markennamen Dibond vertriebenen Verbundwerkstoff handeln. Mit den einen Verbundwerkstoff aufweisenden Fachböden kann das Modul zur Lagerung versteift sein.

Nebeneinander stehende Module können in einer bevorzugten Ausführungsform mittels einer Schiene miteinander verbunden werden. In die Schiene können die benachbarten Wände zweier Module zumindest teilweise einschiebbar sein. Die Schiene kann sich über die gesamte Höhe des Moduls erstrecken. Die Schiene kann aber auch nur Abschnitte der Höhe umfassen. Sofern die Schiene nicht die gesamte Höhe des Moduls aufweist, können mehrere Schienen vorgesehen sein, die zwei nebeneinander stehende Module verbinden. Mittels der Schienen können auch Fachböden der Module gegen ein Herausrutschen nach vorne gesichert werden. Gleichzeitig kann die Schiene eine Nummerierung tragen, die die Fachböden für den Fall einer ausnahmsweise manuellen Entnahme oder Prüfung kennzeichnet. So lassen sich Lagerpositionen durch Koordinatenangaben auch manuell eindeutig identifizieren, Die Schiene kann damit zwei oder sogar drei Funktionen erfüllen.

Um eine vollständige Erweiterbarkeit, Flexibilität und/oder Umbaumöglichkeiten zu gewährleisten, ist es erfindungsgemäß vorgesehen, möglichst wenige konfigurationsabhängige Teile für ein Verfahren des Regalbediengeräts zu verwenden. Dazu kann die Verfahrmöglichkeit des Regalbediengerätes für alle möglichen Regal- bzw. Automatenlängen durch eine Kombination einer begrenzten Anzahl von Elementen abgebildet werden Dazu wird weiterhin eine Möglichkeit geschaffen, bei der auf Zahnriemen, die das Gerät ziehen, verzichtet wird. Das Regalbediengerät steht vorzugsweise auf einem Fahrwerk, das sich so an eine Bodenschiene klemmt, dass oben (an der Decke) keine Schiene mehr erforderlich ist. Das Fahrwerk weist vorzugsweise ein angetriebenes Klemmrad auf, das an der runden Bodenschiene geklemmt ist. Das Klemmrad kann das Regalbediengerät in beliebiger Länge verfahren.

In einer bevorzugten Ausführungsform erfolgt der Hub des Regalbediengeräts an einem Mast. Der Mast und die Energiekette können die einzigen verbliebenen höhen- bzw. längenabhängigen Teile sein. Es kann auch vorgesehen sein, dass eine modulare Stromschiene vorhanden ist, mittels derer Daten und Energie übertragen werden kann. Es kann aber auch vorgesehen sein, dass das Regalbediengerät mit Batterie verfährt und die Daten per Funk erhalten werden. Die Batterie wird durch Zurückkehren des Regalbediengeräts in den Pausenzeiten in seine Ladestation geladen.

In einer weiteren bevorzugten Ausführungsform können im Bereich der Endstücke die Elektronik und/oder die Technik für den Betrieb der Kommissioniervorrichtung vorgesehen sein. Im Bereich der Endstücke und direkt über dem Boden ist ein sogenannter Totraum, der vom Regalbediengerät nicht so erreicht wird, dass Ware ein- und ausgelagert werden kann. Solch ein Totraum kann mit einer Klimaanlage bestückt sein, die die Forderung der Apothekenbetriebsordnung erfüllt, nämlich, den Lagerraum grundsätzlich unter 25°C zu halten. Mit einem Temperaturschalter springt die Klimaanlage nur bei Überschreiten dieser Temperatur an. Ein zusätzlicher Temperaturdatenlogger kann die Vorschrift, dass die Temperatur zu dokumentieren ist, erfüllen.

Die Basismodule können eine vorbestimmte Höhe aufweisen, die insbesondere im Bereich von 2 bis 3 m liegt damit sie noch mit vertretbarem Aufwand transportiert werden können, insbesondere bevorzugt 2,4 m. Die Basismodule können Einstellfüße aufweisen, um Bodenunebenheiten ausgleichen zu können. Die Basismodule können beispielsweise mit einer "Sackkarre" an den Aufstellungsort gebracht werden. Die "Sackkarre" kann eine Markierung aufweisen, mit der die Position zum Nachbarmodul gekennzeichnet ist. Die "Sackkarre" kann höhenverstellbar sein. Die Einstellfüße der Basismodule können beim Aufstellen aus dem Basismodul bzw. ihrer Halterung fallen, um eine Schnellverstellung zu gewährleisten. Die Einstellfüße können mittels Schrauben feinjustiert werden. Beim Transport mit einer "Sackkarre" kann es somit möglich sein, dass das Basismodul beim ersten Aufstellen schon in die geforderte Höhe gebracht werden kann. Die Einstellfüße des Basismoduls können, während die "Sackkarre" das Basismodul auf der gewünschten Höhe hält, auf den Boden fallen und fixiert werden. Die "Sackkarre" kann dann das Basismodul absetzen. Davon unabhängig ist eine Feinregulierung mittels eines Lasers und einer Nachjustage mittels Schrauben.

Das Modul zur Einlagerung kann eine Säule umfassen, die einen Bildschirm, der als Touchscreen ausgestaltet ist, einen Scanner zum Scannen der einzulagernden Güter und/oder weitere Bedienelemente umfasst. Ein Lüftungsschlitz kann oberhalb der Säule vorgesehen sein, um die Warmluft abzuleiten. Es kann vorgesehen sein, dass innerhalb der Säule hinter einer Tür ein Schaltschrank der Kommissioniervorrichtung angeordnet werden kann. Der Bildschirm kann schwenkbar montiert sein. Insbesondere kann der Bildschirm zum Rollo hin für ergonomisches Arbeiten mit seiner Bildschirmfläche verschwenkt werden. Der Bildschirm kann mittels einer bogenförmigen Schiene beim Verschwenken geführt werden. Beispielsweise kann an dem Bildschirm ein Führungsstift vorgesehen sein, der in der Schiene geführt werden kann. Die Schiene kann bevorzugt aus Metall sein. Der Grad des Verschwenkens kann mittels eines Raststifts in der Schiene gestoppt werden. Es können mehrere Rastpositionen in der Verschwenkbewegung vorgesehen sein. Sofern der Bildschirm als Touchscreen ausgestaltet ist, kann vorgesehen sein, den Raststift als Magneten auszubilden, der bei Kontakt des Raststiftes mit dem Metallgehäuse den Bildschirm in der jeweiligen Rastposition fixiert. Es kann auch vorgesehen sein, dass der Raststift in der metallischen Schiene versetzt werden kann, um den Bildschirm an der gewünschten Ausklappstellung zu fixieren.

Bei einer erfindungsgemäßen Kommissioniervorrichtung kann die mindestens eine Ausgabeöffnung frei platziert werden. Beispielsweise kann mittels einer mobilen Blechschere an einer beliebigen Stelle eines Moduls ein Loch nach einer Schablone geschnitten werden, wobei die Blechschere derart ausgebildet sein kann, dass sie die dünne Außenwand nicht verbiegt. Es kann eine Ausgabestelle eingesteckt werden, die mit einem Kranz die Schnittkante verdeckt.

Die Erfindung wird nachfolgend anhand von in der Zeichnung dargestellten Ausführungsbeispielen des näheren erläutert. In der Zeichnung zeigt:
- Fig.1: zeigt ein Ausführungsbeispiel der Erfindung in einer perspektivischen Darstellung in einem nicht zusammengesetzten Zustand;
- Fig.2: zeigt in einer Aufsicht schematisch eine modulartig aufgebaute Kommissioniervorrichtung; und
- Fig. 3: zeigt eine Aufsicht auf eine modulartige Kommissioniervorrichtung gemäß einer weiteren Ausführungsform.

Die Figuren zeigen schematisch Ausführungsformen einer erfindungsgemäßen Kommissioniervorrichtung.

Die Kommissioniervorrichtung weist Basismodule 1 auf, die auf einer Aufstandsfläche aufstehen. Die Basismodule 1 können auf in der Höhe verstellbaren Einstellfüßen aufstehen, um Bodenunebenheiten auszugleichen. Die Basismodule 1 sind zur Einlagerung von einzulagernden Gütern auf Regal- bzw. Flachböden ausgestaltet. Neben den Basismodulen 1 umfasst die Kommissioniervorrichtung Erweiterungsmodule 2, mit denen die Kommissioniervorrichtung in der Höhe erweiterbar ist.

Zum Einlagern von Gütern ist ein Einlagermodul 4 vorhanden, das ein Rollo umfasst, hinter welchem siebzig gleiche Einlagerpositionen vorhanden sind. Das Einlagermodul 4 weist ferner einen Scanner und einen Bildschirm 5 auf. Das Einlagermodul 4 weist die doppelte Breite wie ein Basismodul 1 auf. Das Einlagermodul 4 umfasst den Bildschirm 5, einen Schaltschrank, einen Scanner zum Einscannen der einzulagernden Güter sowie mögliche weitere Bedienelemente. Das Einlagermodul 4 weist eine Breite auf, die doppelt so hoch wie die Breite eines Basismoduls 1 ist.

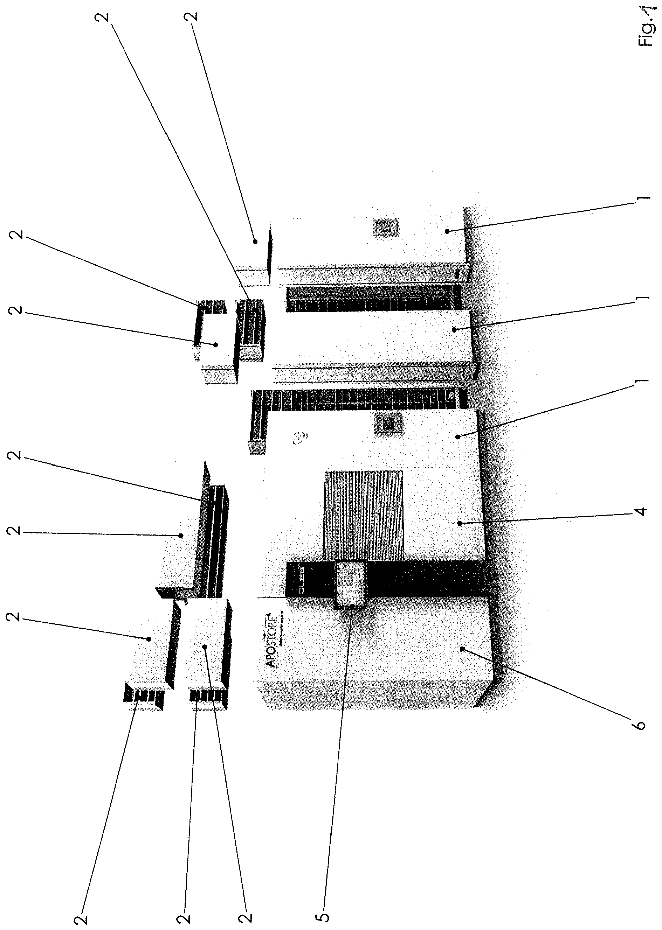

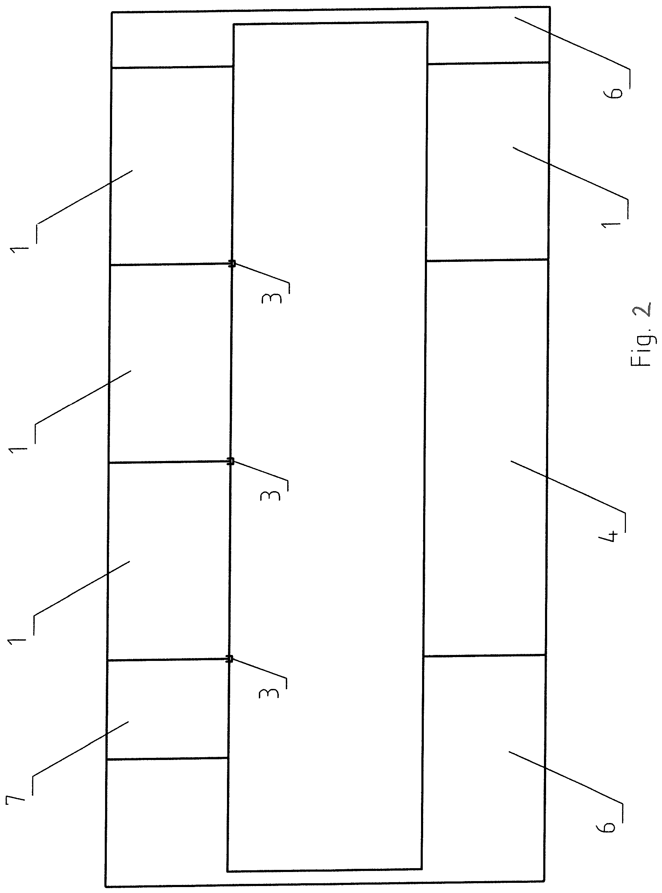

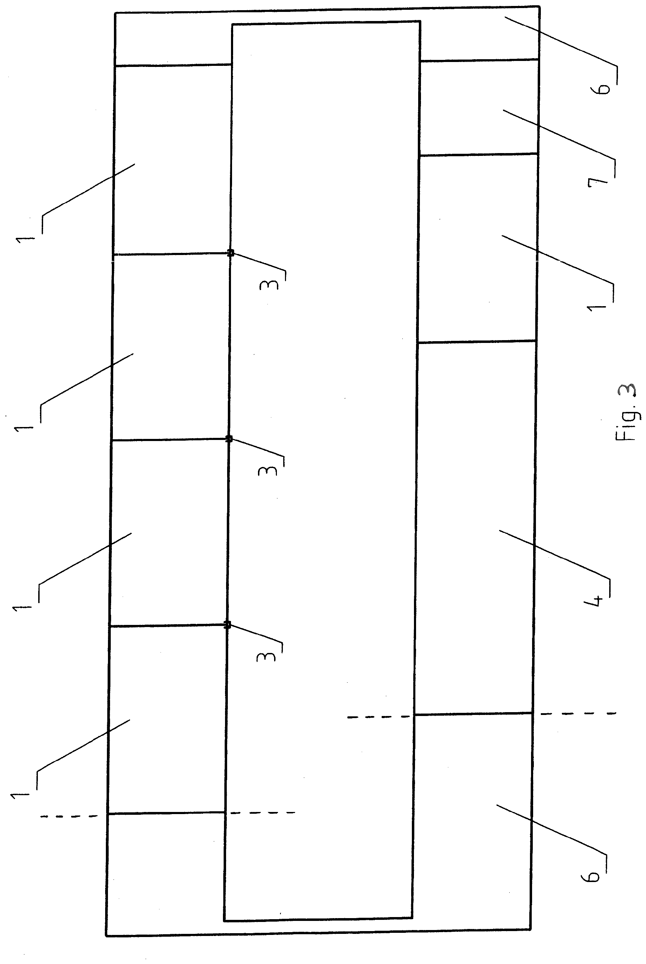

In den Fig. 1 bis 3 ist zu sehen, dass die Kommissioniervorrichtung Endstücke 6 aufweist, die die Aufgabe haben, einen möglichen Bereich über zwei Reihen von einander zugewandten Modulen zu definieren. Die Endstücke 6 halten zwei zueinander gerichtete Regalhälften aus den Modulen auf einem definierten Abstand und sichern die Regalhälften gegen ein Verkippen. Bei dem linken Endstück 6 ist eine Service-Durchgangstür ausgestaltet, über die die Kommissioniervorrichtung gewartet werden kann. Neben dem linken Endstück 6 ist das Einlagermodul 4 angeordnet. Im in Fig. 2 dargestellten Ausführungsbeispiel folgt ein Basismodul 1 und das rechte Endstück 6. Bei dem in Fig. 3 dargestellten Ausführungsbeispiel folgt dem Einlagermodul 4 ein Basismodul 1 und dann ein Ausgleichsmodul 7, das die Hälfte der Breite eines Basismoduls aufweist. Das Ausgleichsmodul 7 kann ebenso wie die Basismodule 1 zur Lagerung von einzulagernden Gütern mittels Fachböden ausgestaltet sein.

Bei dem in Fig. 2 dargestellten Ausführungsbeispiel weist die hintere Regalhälfte drei Basismodule 1 und ein Ausgleichsmodul 7 auf.

Aus dem Vergleich der in den Fig. 2 und 3 dargestellten Ausführungsbeispiele ist zu ersehen, dass eine Kommissioniervorrichtung geschaffen werden kann, deren Breite ein Vielfaches der Breite des Ausgleichsmoduls 7 ist.

In den in den Fig. 2 und 3 dargestellten Ausführungsbeispielen ist das linke Endstück 6 asymmetrisch. Die in dem linken Endstück 6 vorgesehene Tür ist so breit wie ein Basismodul 1, während die Breite auf der anderen Regalseite bzw. -hälfte nur halb so lang ist, wie die Breite eines Basismoduls 1.

Den in den Fig. 2 und 3 dargestellten Ausführungsbeispielen ist zu entnehmen, dass nebeneinander angeordnete Module, beispielsweise die Basismodule 1 und das Ausgleichsmodul 7, über Schienen 3 miteinander verbunden werden können. Dazu können die Wände zweier nebeneinander angeordneter Module derart verbunden werden, dass eine Schiene 3 auf die Kanten der Module geschoben wird, so dass die Wände beider benachbarter Module in die Schienen 3 eingeführt werden. Durch die Schienen 3 werden die Module miteinander verbunden und in die Module einlegbare entfernbare Fachböden gegen Herausrutschen nach vorne gesichert.

Ein Regalbediengerät ist vorgesehen, das ein Fahrwerk aufweist, welches sich an eine Bodenschiene klemmen kann. Vorzugsweise kann die Bodenschiene rund ausgestaltet sein. Im oberen Bereich des Regalbediengeräts ist keine Schiene erforderlich. Eines der Klemmräder, welches an der Bodenschiene geklemmt ist, kann angetrieben sein und fährt das Regalbediengerät in beliebiger Länge. Ein Hub erfolgt am verfahrbaren Mast. Sofern eine Erhöhung der Kommissioniervorrichtung gewünscht ist, so wird das Lastaufnahmemittel (Greifer) des Regalbediengeräts von dem Mast bzw. der Säule gezogen, und die Säule vom Fahrwerk getrennt. Dann kann ein längerer Mast eingesetzt werden. Das Fahrwerk wird wieder an der Schiene geklemmt und der Greifer wieder aufgezogen.

## Patentansprüche

1. Kommissioniervorrichtung mit mindestens einem Regal, das Lagerplätze für zu lagernde Güter aufweist, wobei das mindestens eine Regal aus Modulen (1, 2, 4, 7) aufgebaut und mit Modulen (1, 2, 4, 7) erweiterbar ist, wobei die Kommissioniervorrichtung zumindest ein Modul (1) aufweist, das auf einer Aufstandsfläche aufsteht und als Basismodul (1) bezeichnet wird, und wobei die Kommissioniervorrichtung ein Erweiterungsmodul (2), das verschiebungssicher auf das Basismodul (1) aufgesteckt und/oder auf dem Basismodul (1) angeschraubt ist, sowie ein Regalbediengerät aufweist, **dadurch gekennzeichnet, dass** das Regalbediengerät, mit dem die zu lagernden Güter in ihren Lagerpositionen angesteuert werden, anlernbar ist, und, dass das Regalbediengerät nach dem Aufbau der Kommissioniervorrichtung in einem Einrichtbetrieb zu mehreren repräsentativen Punkten verfährt, die die Lage der Module und damit der Lagerorte hinreichend bestimmen.

2. Kommissioniervorrichtung nach Anspruch 1, wobei das Regal Basismodule (1) aufweist, deren Breite kleiner als die Höhe des Basismoduls (1) ist.

3. Kommissioniervorrichtung nach Anspruch 1 oder 2, wobei das Regal Erweiterungsmodule (2) aufweist, deren Breite größer als die Höhe des Erweiterungsmoduls ist..

4. Kommissioniervorrichtung nach einem der Ansprüche 1 bis 3, wobei die Module (1, 2, 4, 7) verstrebungsfrei miteinander verbunden sind.

5. Kommissioniervorrichtung nach einem der Ansprüche 1 bis 4, wobei die Module (1, 2, 4, 7) mittels Steckverbindung miteinander verbindbar und/oder miteinander verschraubbar sind.

6. Kommissioniervorrichtung nach einem der Ansprüche 1 bis 5, wobei das Basismodul (1) und das Erweiterungsmodul (2) eine vorbestimmte Breite, insbesondere 72 cm, aufweisen.

7. Kommissioniervorrichtung nach einem der Ansprüche 1 bis 6, wobei ein Modul zur Einlagerung (4) vorgesehen ist und eine Breite aufweist, die dem doppelten einer Breite eines Basismodul (1) entspricht.

8. Kommissioniervorrichtung nach einem der Ansprüche 1 bis 7, wobei ein Ausgleichsmodul (7) vorhanden ist, das eine Breite aufweist, die der Hälfte der Breite eines Basismodul (1) entspricht.

9. Kommissioniervorrichtung nach einem der Ansprüche 1 bis 8, wobei die Aufstandfläche viereckig ist, und ein Endstück (6) vorgesehen ist, das zwei Reihen einander zugewandter Module (1, 2, 4, 7) miteinander verbindet.

10. Kommissioniervorrichtung nach einem der Ansprüche 1 bis 9, wobei Module zur Lagerung Fachböden aus einem Verbundwerkstoff aufweisen, die das Modul zur Lagerung versteifen.

11. Kommissioniervorrichtung nach einem der Ansprüche 1 bis 10, wobei nebeneinander stehende Module mittels einer Schiene (3) verbindbar sind, in die benachbarte Wände zweier Module einschiebbar sind.

12. Kommissioniervorrichtung nach einem der Ansprüche 1 bis 11, wobei die Kommissioniervorrichtung Verfahrelemente aufweist, mittels derer die Verfahrbarkeit des Regalbediengeräts zum Ein- und/oder Auslagern von Gütern an das modulförmig aufgebaute Regal anpassbar ist und eine Bodenschiene vorgesehen ist.

13. System mit Modulen zum Aufbau einer Kommissioniervorrichtung nach einem der Ansprüche 1 bis 12.

## Claims

1. Order picking device with at least one shelf having storage spaces for goods to be stored wherein the at least one shelf is constructed from modules (1, 2, 4, 7) and can be extended with modules (1, 2, 4, 7), wherein the order picking device has at least one module (1) which stands on a contact area and is designated as a base module (1), and wherein the order picking device has an extension module (2), which can be fitted to the base module (1) so that it cannot be displaced and/or is screwed to the base module (1), as well as having a storage and retrieval machine, **characterised in that** the storage and retrieval machine, with which the goods to be stored are guided into their storage positions, can be trained and that, after the installation of the order picking device, in an initial setup operation, the storage and retrieval machine moves to a plurality of representative points which sufficiently determine the location of the modules and, therefore, of the storage locations.

2. Order picking device according to claim 1, wherein the shelf has base modules (1) whose width is smaller than the height of the base module (1).

3. Order picking device according to claim 1 or 2, wherein the shelf has extension modules (2) whose width is greater than the height of the extension module.

4. Order picking device according to any one of claims 1 to 3, wherein the modules (1, 2, 4, 7) are connected to each other with no struts.

5. Order picking device according to any one of claims 1 to 4, wherein the modules (1, 2, 4, 7) can be connected to each other by plug-in connectors and/or can be screwed together.

6. Order picking device according to any one of claims 1 to 5, wherein the widths of the base module (1) and the extension module (2) are predetermined, in particular 72 cm.

7. Order picking device according to any one of claims 1 to 6, wherein one module is provided for storage (4) and whose width corresponds to twice that of a base module (1).

8. Order picking device according to any one of claims 1 to 7, wherein a balancing module (7) is present whose width corresponds to a half of that of a base module (1).

9. Order picking device according to any one of claims 1 to 8, wherein the contact surface is rectangular, and an end portion (6) is provided which connects together two rows of modules (1, 2, 4, 7) facing each other.

10. Order picking device according to any one of claims 1 to 9, wherein, modules have shelves for storage made from a composite material which stiffens the module for storing.

11. Order picking device according to any one of claims 1 to 10, wherein modules standing adjacent to each other can be connected by a rail (3) into which adjacent walls of two modules can be inserted.

12. Order picking device according to any one of claims 1 to 11, wherein the order picking device has travel elements by means of which the mobility of the storage and retrieval machine can be adjusted for placing and/or picking goods to/from the shelf, installed in a modular fashion, and is provided with a bottom rail.

13. System with modules for the installation of an order picking device according to any one of claims 1 to 12.

## Revendications

1. Dispositif de préparation de commandes avec au moins un rayonnage, l'emplacement d'entreposage étant destiné à des produits à entreposer, l'au moins un rayonnage étant composé de modules (1, 2, 4, 7) et extensible avec des modules (1, 2, 4, 7), le dispositif de préparation de commandes présentant au moins un module (1), monté sur une surface d'appui et désigné comme un module de base (1), et le dispositif de préparation de commandes présentant un module d'extension (2), qui est mis sur le module de base (1) pour ne pas être décalé et/ou vissé sur le module de base (1), ainsi qu'un transstockeur, **caractérisé en ce que** ledit transstockeur, avec lequel les produits à entreposer sont mis dans leur position de stockage, est programmable et que le transstockeur accède en mode de réglage à plusieurs points représentatifs, qui déterminent suffisamment la position des modules et donc des endroits d'entreposage, une fois le dispositif de préparation de commandes installé.

2. Dispositif de préparation de commandes selon la revendication 1, **caractérisé en ce que** le rayonnage présente des modules de base (1) dont la largeur est inférieure à la hauteur du module de base (1).

3. Dispositif de préparation de commandes selon la revendication 1 ou 2, le rayonnage présentant des modules d'extension (2) dont la largeur est supérieure à la hauteur du module d'extension.

4. Dispositif de préparation de commandes selon l'une des revendications 1 à 3, les modules (1, 2, 4, 7) étant reliés entre eux sans entretoise.

5. Dispositif de préparation de commandes selon l'une des revendications 1 à 4, les modules (1, 2, 4, 7) pouvant être reliés entre eux à l'aide de raccord rapide et/ou vissés ensemble.

6. Dispositif de préparation de commandes selon l'une des revendications 1 à 5, le module de base (1) et le module d'extension (2) présentant une largeur prédéterminée, de préférence de 72 cm.

7. Dispositif de préparation de commandes selon l'une des revendications 1 à 6, un module destiné à l'entreposage (4) étant prévu et présentant une largeur qui correspond au double d'une largeur d'un module de base (1).

8. Dispositif de préparation de commandes selon l'une des revendications 1 à 7, un module de compensation (7) étant existant qui présente une largeur correspondant à la moitié d'une largeur d'un module de base (1).

9. Dispositif de préparation de commandes selon l'une des revendications 1 à 8, la surface d'appui étant carrée, et un embout (6) étant prévu qui relie entre elles deux rangées des modules en vis-à-vis (1, 2, 4, 7).

10. Dispositif de préparation de commandes selon l'une des revendications 1 à 9, les modules destinés à l'entreposage présentant des étagères en matériau composite qui renforcent le module destiné à l'entreposage.

11. Dispositif de préparation de commandes selon l'une des revendications 1 à 10, les modules disposés les uns à côté des autres pouvant être reliés par un rail (3) dans lequel les parois adjacentes de deux modules peuvent être coulissées.

12. Dispositif de préparation de commandes selon l'une des revendications 1 à 11, le dispositif de préparation de commandes présentant des éléments mobiles au moyen desquels le déplacement du transstockeur est adaptable au rayonnage monté modulaire pour le stockage et/ou le déstockage de produits, et un rail au sol étant prévu.

13. Système avec des modules destinés à la construction d'un dispositif de préparation de commandes selon l'une des revendications 1 à 12.
